# EUROPEAN PATENT SPECIFICATION

(11) **EP 2 615 922 B1**
(45) Date of publication and mention of the grant of the patent: **25.01.2017**
(21) Application number: 11763990.6
(22) Date of filing: 11.08.2011
(51) Int. Cl.: A01N 63/00, A01N 25/14

(54) **LYOPHILIZED BIOPESTICIDE EFFERVESCENT GRANULE AND PRODUCTION METHOD THEREOF**
LYOPHILISIERTES BIOPESTIZID BRAUSEGRANULAT SOWIE VERFAHREN ZU DESSEN HERSTELLUNG
GRANULES EFERVESCENTS DE BIOPESTICIDES LYOPHILISES ET LEUR PROCEDE DE PRODUCTION

(30) Priority: 16.09.2010 TR 201007613
(43) Date of publication of application: 24.07.2013
(73) Proprietor: Yeditepe Universitesi, 34755 Istanbul (TR)
(72) Inventor: SAHIN, Fikrettin, Kadikoy 34755, Istanbul (TR); DUMAN, Gulengul, Kadikoy 34755, Istanbul (TR); YAZICI, Munevver Muge, Kadikoy 34755, Istanbul (TR)
(74) Representative: Dericioglu, E. Korhan
(86) International application number: PCT/IB2011/053577
(87) International publication number: WO 2012/035454

(56) References cited:
- EP-A2- 0 353 689
- WO-A2-00/07571

## Description

### Field of the Invention

The present invention relates to a granulated lyophilized effervescent biopesticide mixture and production method thereof.

### Background of the Invention

Insecticides can be produced chemically against pests while they can also be obtained from microorganisms. Generally environmentally friendly bacteria whose genetics is well known are preferred in selection of the said living organisms. Biopesticides are insecticides that are obtained from organisms. Biopesticides (biological pesticides) are obtained from various living things such as animals, plants, bacteria and many minerals, and are used for pest control. The most widely used organisms for obtaining biopesticides are *Bacillus thuringiensis* bacteria and they form 90% of the commercially available biopesticides. Microbial pesticides are active ingredients like spores, endotoxins and enzymes produced by microorganisms such as bacteria, fungi, viruses and protozoa.

Lyophilization is a special drying and preservation technique that utilizes a process called sublimation for drying the substance. Removal of the water in frozen substances in the state of water vapor under reduced atmospheric pressure is obtained via sublimation. In lyophilization technique, the water within the products is frozen in the very beginning of the drying process and water is removed from within the product via sublimation.

Many products such as microbiological cultures, agars, dead animals, flowers, food, chemicals are lyophilized since this process enables to maintain stability of sensitive chemical and biochemical materials. Thanks to the lyophilization method, there occurs no deformation on the inner and outer structure of the substances, storage requiring special conditions is not needed and it is possible for the substances to preserve their initial states.

The United States patent document no. US4166112 discloses mosquito larvae control using *Bacillus* spores. Following isolation *of Bacillus* spores, jojoba oil is used as the carrier system. In this document, the active ingredient in the form of dispersion is aimed to remain on the surface and act against the mosquito larvae.

The European patent document no. EP1306008 discloses preparation of a formulation comprising insecticidal compositions that enable control of mosquito larvae. The document mentions an insecticide obtained from *Bacillus thuringiensis.* The active ingredient is enabled to remain on the surface by using vegetable structures such as corn, wheat starch as the carrier system.

The Russian patent document no. RU2295563 discloses a new lactic acid bacterium capable of extracellular polysaccharide synthesis. The starter culture of strain that is aimed to be produced comprises milky whey, concentrated hydrolyzed milk, KH₂PO₄, Na₂HPO₄, MgSO₄, sodium citrate, and distilled water; and the bacterium is obtained in this mixture as a result of semi-continuous fermentation.

The Lithuanian patent document no. LT4541 discloses bacteria production and use of these bacteria for medical treatment purposes. The invention comprises the steps of cultivating Lactobacillus cultures in fat-free milk with (2-3) % of yeast autolysis, mixing the chilled cultures with the protective medium at a ratio of 2:1 consisting of 7-9 % fat-free milk powder, 2.5-3 % sodium glutamate, 10-12 % glucose, 0.4-0.7 % sodium bicarbonate and distilled water, and lyophilizing the obtained mixture.

Further, EP0353689 describes the use of skimmed milk for the storage of freeze-dried bacteria and WO00/07571 describes effervescent freeze-dried bacteria.

### Summary of the Invention

The objective of the present invention is to provide an effervescent lyophilized biopesticide granule that does not have harmful effects on environment and human health, and production method thereof.

Another objective of the present invention is to provide an economical lyophilized effervescent biopesticide granule and production method thereof.

A further objective of the present invention is to provide a lyophilized effervescent biopesticide granule in the form of a single use dosage as powder or granules and production method thereof.

Another objective of the present invention is to provide a lyophilized effervescent biopesticide granule which provides ease of use due to rapid dissolving of the granules containing the active ingredient in water with the release of carbon dioxide, and production method thereof.

A further objective of the present invention is to provide a lyophilized effervescent biopesticide granule, wherein additional complicated and expensive excipients are not required to be used much, and production method thereof.

### Detailed Description of the Invention

The lyophilized effervescent biopesticide granule and the production method thereof developed to fulfill the objective of the present invention is illustrated in the accompanying figure wherein,

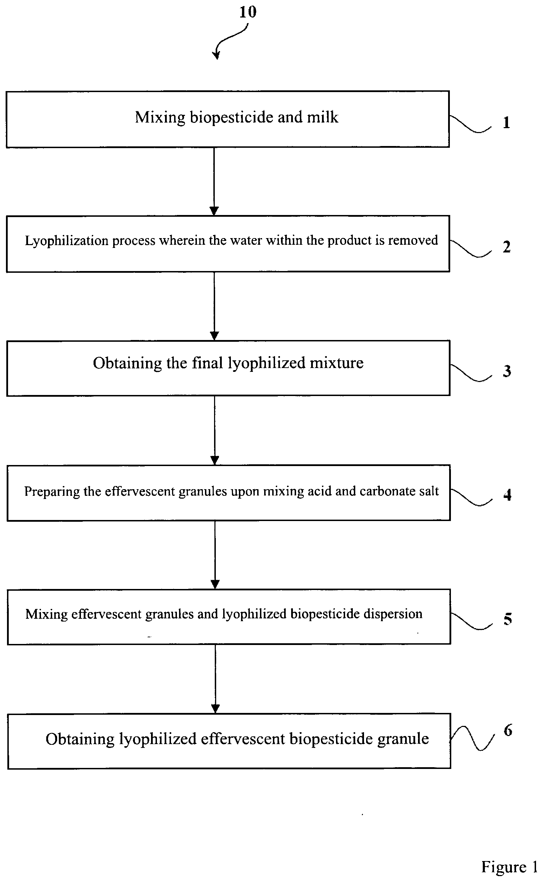

Figure 1 is the view of the flowchart for the lyophilized effervescent biopesticide granule and the production method thereof.

The steps of the lyophilized effervescent biopesticide granule and the production method thereof developed to fulfill the objective of the present invention are listed below, wherein,
10. Lyophilized Effervescent Biopesticide Granule Production Method
1. Mixing biopesticide and milk
2. Lyophilization process wherein the water within the product is removed
3. Obtaining the final lyophilized mixture
4. Preparing the effervescent granules upon mixing acid and carbonate salt
5. Mixing effervescent granules and lyophilized biopesticide dispersion
6. Obtaining lyophilized effervescent biopesticide granule as the end product

In the inventive lyophilized effervescent biopesticide granule and the production method thereof (10), microorganisms are used as biopesticide. As the starter material lyophilized biopesticide and as the surfactant whole fat or semi-skimmed milk is used. Upon mixing the biopesticide and milk (1) a disperse system is obtained.

The biopesticide and milk dispersion is frozen and the water therein is removed via sublimation, and thus lyophilization (2) is performed. Finally, the lyophilized final mixture is obtained (3).

On the other hand, in order to prepare the effervescent granules that are to be used as the carrier (4), an acid or acid mixture and a carbonate or bicarbonate salt are mixed. This mixture is agglomerated with some water. As a result of agglomeration, granules are obtained. The lyophilized mixture is mixed with the effervescent granules at a proportion in the range of 1:1 to 1:10 by weight (5).

In the process of mixing the components (1), the mixing proportion of biopesticide and milk is 1:5 to 1:1000 by weight.

The acid used in the step of preparing effervescent granules (4), whose granule particle size distribution is 40-80µm, is preferably non-aqueous citric acid or citric acid containing crystal water or a mixture of citric acid and tartaric acid. The acid mixture is comprised of citric acid and tartaric acid half as much as citric acid. The salt that is used is preferably sodium bicarbonate or sodium carbonate. The mixing proportion of acid and salt in obtaining effervescent granules (4) is 1 mol acid and 3 moles sodium bicarbonate or in another embodiment, 2 moles acid and 3 moles sodium carbonate.

Following the step of mixing the effervescent granules with the lyophilized biopesticide dispersion (5), lyophilized biopesticide effervescent granules are obtained as the end product (6). When the said biopesticide granules are mixed with water, due to the fact that CO₂ gas is released as a result of complete dissolving of the effervescent granules, the biopesticide can dissolve rapidly and homogenously.

By means of the lyophilization process (2), activity of the mixture as a biopesticide in biological control and also the storage time of the obtained material increase. Following the process of mixing with effervescent granules (5), the biopesticide can be effectively used in the applications. The biopesticide effervescent granules are packaged in single use polyethylene bags (sachet). The biopesticide granule that is obtained is a material which can be used in biological control and does not have harmful effects on environment and human beings.

## Claims

1. A lyophilized effervescent biopesticide granule production method (10), **characterized by** the steps of
- mixing biopesticide and milk (1),
- lyophilization process wherein the water within the product is removed (2),
- obtaining the final lyophilized mixture (3),
- preparing the effervescent granules upon mixing acid and carbonate salt (4),
- mixing effervescent granules and lyophilized biopesticide dispersion (5),
- obtaining lyophilized effervescent biopesticide granule as the end product (6).

2. A lyophilized effervescent biopesticide granule production method (10) according to Claim 1, **characterized in that**, in the step of mixing biopesticide and milk (1), biopesticide and milk are mixed at a proportion of 1:5 to 1:1000 by weight.

3. A lyophilized effervescent biopesticide granule production method (10) according to Claim 1 to 2, **characterized in that** the acid selected in the step of preparing the effervescent granules upon mixing acid and carbonate salt (4) is citric acid.

4. A lyophilized effervescent biopesticide granule production method (10) according to Claim 1 to 2, **characterized in that** the acid selected in the step of preparing the effervescent granules upon mixing acid and carbonate salt (4) is the mixture of citric acid and tartaric acid.

5. A lyophilized effervescent biopesticide granule production method (10) according to Claim 1 to 4, **characterized in that** the proportion of mixture in the step of mixing lyophilized biopesticide mixture and effervescent granules (5) is in the range of 1:1 to 1:10.

6. A lyophilized effervescent biopesticide granule production method (10) according to Claim 1 to 5, **characterized in that** the mixing proportion of the acid and carbonate in the step of obtaining effervescent granules (4) is 1 mol acid and 3 moles sodium bicarbonate.

7. A lyophilized effervescent biopesticide granule production method (10) according to Claim 1 to 6, **characterized in that** the mixing proportion of the acid and carbonate in the step of obtaining effervescent granules (4) is 2 moles acid and 3 moles sodium carbonate.

8. Lyophilized effervescent biopesticide granule which is obtained by means of a method (10) according to any one of the preceding claims.

9. Lyophilized effervescent biopesticide granule according to Claim 8, which is packaged within a single use polyethylene bag (sachet).

## Patentansprüche

1. Ein Herstellungsverfahren für lyophilisiertes Biopestizid-Brausegranulat (10), **gekennzeichnet durch** die Verfahrensschritte;
- Mischen von Biopestizid und Milch (1),
- Lyophilisierungsprozess, wobei das Wasser innerhalb des Produkts entfernt ist,
- Gewinnen von lyophilisierter Endmischung (3),
- Vorbereiten von Brausegranulate nach dem Mischen der Säure und des karbonsäurehaltigen Salzes (4),
- Mischen von Brausegranulate und lyophilisierter Biopestizid-Dispergierung (5),
- Gewinnen von lyophilisiertem brausendem Biopestizid-Granulat als das Endprodukt (6).

2. Ein Herstellungsverfahren für lyophilisiertes Biopestizid-Brausegranulat (10) gemäß Anspruch 1, **dadurch gekennzeichnet, dass** im Verfahrens schritt der Mischung von Biopestizid und Milch (1) Biopestizid und Milch mit einem Gewichtsanteil von 1:5 bis 1:1000 gemischt sind.

3. Ein Herstellungsverfahren für lyophilisiertes Biopestizid-Brausegranulat (10) gemäß Anspruch 1 bis 2, **dadurch gekennzeichnet, dass** die im Schritt des Vorbereitens von Brausegranulate nach dem Mischen der Säure und des karbonsäurehaltigen Salzes (4) gewählte Säure Zitronensäure ist.

4. Ein Herstellungsverfahren für lyophilisiertes Biopestizid-Brausegranulat (10) gemäß Anspruch 1 bis 2, **dadurch gekennzeichnet, dass** die im Schritt des Vorbereitens von Brausegranulate nach dem Mischen der Säure und des karbonsäurehaltigen Salzes (4) gewählte Säure eine Mischung von Zitronensäure und Weinsäure ist.

5. Ein Herstellungsverfahren für lyophilisiertes Biopestizid-Brausegranulat (10) gemäß Anspruch 1 bis 4, **dadurch gekennzeichnet, dass** das Mischungsverhältnis im Schritt des Mischens von lyophilisierter Biopestizid-Mischung und Brausegranulate (5) im Bereich von 1:1 bis 1:10 ist.

6. Ein Herstellungsverfahren für lyophilisiertes Biopestizid-Brausegranulat (10) gemäß Anspruch 1 bis 5, **dadurch gekennzeichnet, dass** das Mischungsverhältnis von Säure und Karbonat im Schritt des Gewinnen von Brausegranulate (4) 1 Mol Säure und 3 Mole Natriumbikarbonat ist.

7. Ein Herstellungsverfahren für lyophilisiertes Biopestizid-Brausegranulat (10) gemäß Anspruch 1 bis 6, **dadurch gekennzeichnet, dass** das Mischungsverhältnis von Säure und Karbonat im Schritt des Gewinnens von Brausegranulate (4) 2 Mole Säure und 3 Mole Natriumkarbonat ist.

8. Lyophilisiertes Biopestizid-Brausegranulat, welches mittels eines Verfahrens (10) gemäß einem der vorhergehenden Ansprüche gewonnen ist.

9. Lyophilisiertes Biopestizid-Brausegranulat gemäß Anspruch 8, welches innerhalb eines Einweg-Polyäthylen-Beutels (Päckchen) verpackt ist.

## Revendications

1. Méthode de production d'un granulé biopesticide effervescent lyophilisé, **caractérisée par** les étapes de
- mélanger le biopesticide et du lait (1)
- processus de lyophilisation dans lequel on élimine de l'eau dans le produit (2),
- obtenir le mélange final lyophilisé (3),
- préparer les granulés effervescents en mélangeant l'acide et du sel de carbonate (4),
- mélanger les granulés effervescents et la dispersion biopesticide lyophilisée (5),
- obtenir le granulé biopesticide effervescent lyophilisé comme produit final (6).

2. Méthode de production d'un granulé biopesticide effervescent lyophilisé (10) selon la revendication 1, **caractérisée en ce que**, dans l'étape de mixage du biopesticide avec du lait (1), le biopesticide et du lait sont mélangé dans une proportion de 1:5 à 1:1000 en poids.

3. Méthode de production d'un granulé biopesticide effervescent lyophilisé (10) selon les revendications 1 et 2, **caractérisée en ce que** l'acide choisi dans l'étape de préparation des granulés effervescents en mélangeant l'acide avec du sel de carbonate (4) est l'acide citrique.

4. Méthode de production d'un granulé biopesticide effervescent lyophilisé (10) selon les revendications 1 et 2, **caractérisée en ce que** l'acide choisi dans l'étape de préparation des granulés effervescents en mélangeant l'acide avec du sel de carbonate (4) est le mélange d'acide citrique et d'acide tartrique.

5. Méthode de production d'un granulé biopesticide effervescent lyophilisé (10) selon les revendications 1 à 4, **caractérisée en ce que** la proportion de mélange dans l'étape de mélanger le mélange du biopesticide lyophilisé et les granulés effervescents (5) est dans la gamme de 1:1 à 1:10.

6. Méthode de production d'un granulé biopesticide effervescent lyophilisé (10) selon les revendications 1 à 5, **caractérisé en ce que** la proportion de mélange d'acide et du carbonate dans l'étape d'obtention des granulés effervescents (4) est 1 mol d'acide et 3 moles de bicarbonate de sodium.

7. Méthode de production d'un granulé biopesticide effervescent lyophilisé (10) selon les revendications 1 à 6, **caractérisé en ce que** la proportion de mélange d'acide et du carbonate dans l'étape d'obtention des granulés effervescents (4) est 2 moles d'acide et 3 moles de carbonate de sodium.

8. Granulé biopesticide effervescent lyophilisé obtenu au moyen de la méthode (10) selon l'une quelconque des revendications précédentes.

9. Granulé biopesticide effervescent lyophilisé selon la revendication 8 emballé dans un sachet polyéthylène à usage unique.
